# EUROPÄISCHE PATENTANMELDUNG

(11) **EP 1 815 965 A1**
(43) Veröffentlichungstag der Anmeldung: **08.08.2007**
(21) Anmeldenummer: 06002028.6
(22) Anmeldetag: 01.02.2006
(51) Int. Cl.: B29C 47/00, B29C 47/88, B29C 47/90

(54) **Verfahren zur Herstellung eines Hohlkörpers**

(71) Anmelder: REHAU AG + Co, 95111 Rehau (DE)
(72) Erfinder: Stadthalter, Peter, 96152 Burghaslach (DE); Winter, Karlheinz, 95111 Rehau (DE); Helmreich, Andreas, 96199 Zapfendorf (DE)

(57) **Zusammenfassung**

Die Erfindung betrifft ein Verfahren zur Herstellung eines Hohlkörpers, vorzugsweise eines Rohres, der zumindest abschnittsweise einen vernetzbaren Kunststoff (1) aufweist, mit den folgenden Schritten: Extrudieren des vernetzbaren Kunststoffs zu einem Hohlkörperprofil und Fördern des Hohlkörpers in einem kontinuierlichen Strang. Um die bekannten Nachteile des Standes der Technik zu beseitigen und ein kostengünstiges und einfaches Verfahren zum Herstellen von Hohlkörpern, insbesondere zum beschleunigten Vernetzten von extrudierten Hohlkörpern bereitzustellen, ist das erfindungsgemäße Verfahren gekennzeichnet durch Beaufschlagen des vernetzbaren Kunststoffs mit einem Vernetzungsmittel (6), während des Förderns des kontinuierlichen Strangs.

## Beschreibung

Die Erfindung betrifft ein Verfahren zur Herstellung eines Hohlkörpers, vorzugsweise eines Rohres, der zumindest abschnittsweise einen vernetzbaren Kunststoff aufweist, mit den folgenden Schritten: Extrudieren des vernetzbaren Kunststoffs zu einem Hohlkörperprofil und Fördern des Hohlkörpers in einem kontinuierlichen Strang. Zudem betrifft die Erfindung einen nach diesem Verfahren hergestellten Hohlkörper.

Derartige Hohlkörper werden beispielsweise zum Transport von Flüssigkeiten eingesetzt und werden dabei hohen Drücken und Temperaturen ausgesetzt. Bei extrudierten Rohren geht es darum, neben der Druckfestigkeit auch Temperaturfestigkeit und Abriebbeständigkeit zu erzielen. Insbesondere soll eine Punktlastbeständigkeit erzielt werden, d.h. die Verhinderung von Spannungsrissbildung. Derzeit gibt es Vollwandrohre aus vernetztem Polyethylen (PE) sowie Rohre mit Schichten aus vernetztem PE auf der Innen- und/oder Außenseite der Rohre.

Aus der EP 0 869 304 B1 sind Mehrschichtrohre bekannt, die aus einem Grundrohr aus PE100 und einer Außenschicht aus vernetztem Polyethylen (PE-X) bestehen, sowie in einer besonderen Ausführungsform eine Diffusionssperrschicht gegenüber Schadstoffen aufweisen. Diese Rohre sollen auf ökonomische Weise eine besondere Widerstandsfähigkeit gegen äußere mechanische Belastungen aufweisen, indem die dünne und damit kostenreduzierte Außenschicht aus PE-X für erheblich verbessertes Abriebverhalten und Kerbunempfindlichkeit sorgt, wodurch grabenlose Verlegetechniken ermöglicht werden.

Die DE 20010111 dagegen beschreibt dreischichtige Rohre, bei denen das Grundrohr ebenfalls aus PE100 und sowohl die Innen- als auch die Außenschicht aus einem PE mit erhöhter Spannungsrissbeständigkeit bestehen - mit der gleichen Zielsetzung wie beim vorbeschriebenen Rohr.

Vernetztes Polyethylen (PEX) entsteht durch chemisches Aneinanderfügen von einzelnen Polyethylenmolekülen mit dem Zweck, die Eigenschaften des ursprünglichen Ausgangsstoffes für den Einsatz bei hohen Temperaturen zu verbessern. Vernetztes Polyethylen (PEX) zeichnet sich vor allem aus durch hohe Temperaturbeständigkeit sowie hohe Beständigkeit gegen Spannungsrisskorrosion und langsames Risswachstum.

Es gibt drei gängige Verfahren zur Vernetzung von PE:

Bei der Peroxidischen-Vernetzung (PE-Xa) wird Peroxid zum Polyethylen-Ausgangsstoff gegeben und mit diesem vermischt. Die Vernetzungen bilden sich innerhalb der Polymerschmelze unter sehr hohem Druck und sehr hohen Temperaturen aus. Dazu ist spezielles Extrusionswerkzeug erforderlich. Das PE-Xa Herstellungsverfahren ist sehr zeitaufwendig und wegen des hohen Zeit- und Energieaufwands sehr kostenintensiv.

Bei der Silanvernetzung (PE-Xb) wird dem Polyethylengerüst ein reaktives Silanmolekül beigefügt. Dieses Präparat wird mit einem Katalysator vermengt. Die Silanvernetzung zeichnet sich durch normale Extrusionsparameter und -werkzeuge aus. Die Vernetzung geschieht in Anwesenheit von Wasser und vorzugsweise erhöhter Temperatur, wobei der Vernetzungsprozess von der Reaktivität des Silan-/ Katalysatorsystems, der Temperatur und der Feuchtigkeit abhängig ist. Nach dem Stand der Technik gibt es drei unterschiedliche Verfahren zur Silanvernetzung: die extrudierten Rohre werden außerhalb der Produktionsstrecke so lange (mehrere Wochen bis Monate) bei Umgebungsbedingungen gelagert, bis der erforderliche Vernetzungsgrad erreicht ist, oder der Vernetzungsprozess nach der Fertigung wird beschleunigt, indem die Rohre z.B. in einer Kammer bei feuchtheißem Klima gelagert oder nachträglich mit heißem Wasser durchströmt werden, oder es werden hoch reaktive Silan-/Katalysatorsysteme eingesetzt. Letztere haben neben den hohen Kosten noch den Nachteil, dass die Vernetzung bereits im Extruder einsetzen kann, was zu Fehlstellen im Rohr führt.

Bei der Strahlungsvernetzung (PE-Xc) wird der Hohlkörper mit einem bestimmten Profil in einem herkömmlichen Extrusionsverfahren extrudiert. In einem zweiten Vorgang wird der extrudierte Hohlkörper aus gewöhnlichem, vernetzbaren Polyethylen durch eine gesonderte Strahlungsquelle bestrahlt, was die Polyethylenmoleküle derart anregt, dass sie untereinander Vernetzungen bilden.

Die bekannten Verfahren zur Herstellung von Rohren mit Schichten aus vernetztem PE haben gemeinsam, dass sie mit hohen Herstellungskosten durch hohen Bedarf an Zeit, Platz, Energie, Personal, Maschinen und Einrichtungen einhergehen, insbesondere die Silanvernetzung aufgrund des separaten Prozessschritts der Vernetzung.

Im Lichte dessen liegt der Erfindung die Aufgabe zugrunde, die genannten Nachteile des Standes der Technik zu beseitigen und ein kostengünstiges und einfaches Verfahren zum Herstellen von Hohlkörpern, insbesondere zum beschleunigten Vernetzten von extrudierten Hohlkörpern bereitzustellen.

Die Aufgabe wird gelöst durch ein Verfahren der eingangs genannten Art, das sich erfindungsgemäß kennzeichnet durch Beaufschlagen des vernetzbaren Kunststoffs mit einem Vernetzungsmittel während des Förderns des kontinuierlichen Strangs. Das Vernetzungsmittel ist der Initiator der Vernetzung. Der dem erfindungsgemäßen Herstellungsverfahren zugrunde liegende Gedanke umfasst die Kombination zweier im Wesentlichen gegenläufiger Prozesse. Einerseits die Extrusion des Hohlkörperprofils mit dem Ziel, eine schnelle Abkühlung des Hohlkörperprofils zur Formfixierung herbeizuführen, andererseits die zumindest abschnittsweise Vernetzung des Hohlkörperprofils, die über einen langen Zeitraum hohe Temperaturen erfordert. Aufgrund der entgegengesetzten Anforderungen bezüglich der Umgebungsbedingungen beeinflussen sich die beiden Prozesse negativ. Dadurch, dass der vernetzbare Kunststoff während des Förderns des kontinuierlichen Strangs mit einem die Vernetzung auslösenden Vernetzungsmittel, z.B. Wasserdampf, beaufschlagt wird, wird der Vernetzungsprozess bereits innerhalb der Produktionsstrecke, beim Fördern des kontinuierlichen Strangs, initiiert. Um die angestrebten Materialeigenschaften zu erzielen, ist es völlig ausreichend, das Rohr nur an der Innenseite oder an der Außenseite zu vernetzen. An der anderen Seite kann das extrudierte Rohr bereits abkühlen oder aktiv abgekühlt werden, um die durch Extrusion erhaltene Form zu fixieren. Im Ergebnis kann ein Hohlkörper mit Schichten aus vernetztem Kunststoff im einem gegenüber dem Stand der Technik erheblich beschleunigten Verfahren hergestellt werden.

Bei dem erfindungsgemäßen Verfahren ist es im Speziellen von entscheidendem Vorteil, dass das Vernetzungsmittel die Möglichkeit hat, bei höheren Temperaturen in die Polymerschmelze zu diffundieren. Die Diffusionsgeschwindigkeit ist wie allgemein bekannt temperaturabhängig und nimmt über dem Kristallitschmelzpunkt nochmals deutlich zu, da das Vernetzungsmittel nicht in bzw. durch die Kristallite hindurch diffundieren kann.

Ein weiterer Vorteil des erfindungsgemäßen Verfahrens ergibt sich hauptsächlich bei schnell laufenden bzw. dickwandigen Rohren, bei denen verfahrensbedingt die Vernetzung am Ende der Extrusionsstrecke nicht abgeschlossen ist. Durch die Beaufschlagung des Rohres während der Extrusion mit dem Vernetzungsmittel, beispielsweise Wasserdampf, diffundiert zum einen das Vernetzungsmittel in die Rohrwand und zum anderen bildet sich ein Kondensat an der Wandfläche nach dem Abkühlen. Die Menge an Vernetzungsmittel im bzw. an der Oberfläche des Materials reicht aus, eine Nachvernetzung ohne weitere Zuführung von Vernetzungsmittel durchzuführen. Die kostenintensive Spülung der Rohre (anschließen, abschließen, trocken blasen) entfällt. Weiterhin kann bei noch nicht abgeschlossener Vernetzung der Rohre in einem nachträglichen Verfahrensschritt der Nachvernetzung beispielsweise in einer temperierten Kammer die Kammertemperatur problemlos über die Siedetemperatur von Wasser angehoben werden, womit eine weitere Beschleunigung des Vernetzungsprozesses erreicht wird.

In einer besonders vorteilhaften Ausführung der Erfindung bildet der zu vernetzende Kunststoff die Innenseite des Hohlkörpers.

Bei einer derartigen Ausführungsform ist es von Vorteil, wenn das Vernetzungsmittel in das Lumen des Hohlkörpers eingebracht wird.

In einer weiteren, vorteilhaften Ausführung der Erfindung bildet der zu vernetzende Kunststoff die Außenseite des Hohlkörpers.

Um einen hohen Vernetzungsgrad zu erreichen ist es von Vorteil, wenn zumindest ein Teil des Vernetzungsmittels in den zu vernetzenden Kunststoff eindiffundiert wird.

Um einen besonders hohen Vernetzungsgrad zu erreichen und um das Verfahren noch weiter zu beschleunigen ist es hilfreich, wenn der vernetzbare Kunststoff unmittelbar nach dem Extrudieren, d.h. unmittelbar nach dem Verlassen des Extrusionswerkzeugs mit dem Vernetzungsmittel beaufschlagt wird.

Um das Hohlkörperprofil beim Fördern zu stützen und um ein Einfallen des Hohlkörperprofils zu vermeiden ist es von Vorteil, wenn das Vernetzungsmittel ein Druckmedium ist.

Um die Vernetzungsgeschwindigkeit durch Zufuhr von zusätzlicher Feuchtigkeit noch weiter erhöhen ist es hilfreich, wenn das Vernetzungsmittel ein wasserhaltiges Druckmedium ist.

Die Vernetzungsgeschwindigkeit und der Vernetzungsgrad im zu vernetzenden Kunststoff können weiter erhöht werden, wenn das Vernetzungsmittel erwärmt wird bevor der zu vernetzende Kunststoff damit beaufschlagt wird.

Ein besonders vorteilhaftes Vernetzungsergebnis lässt sich erzielen, wenn das Vernetzungsmittel Wasserdampf aufweist.

Ein besonders gutes Vernetzungsergebnis lässt sich erzielen, wenn der Wasserdampf einen Überdruck gegenüber der Umgebungsatmosphäre von 0,5 bar bis 1 bar aufweist. Der Dampf kann gleichzeitig als Stützluft zum Stabilisieren des Hohlkörperprofils verwendet werden.

Ein noch besseres Vernetzungsergebnis lässt sich erzielen, wenn der Wasserdampf eine Temperatur von 100°C bis 200°C aufweist.

Das erfindungsgemäße Verfahren ist besonders vorteilhaft einsetzbar, wenn der Kunststoff des Hohlkörpers silanhaltiges Polyethylen aufweist.

Das erfindungsgemäße Verfahren ist ebenso besonders vorteilhaft einsetzbar, wenn der Hohlkörper mehrschichtig ist, wobei eine Schicht mit dem vernetzbaren Kunststoff an der Innenseite und/oder der Außenseite des Hohlkörpers angeordnet ist.

Zur Senkung der Herstellungskosten des vernetzten Endprodukts ist es nützlich, den Anteil des vernetzbaren Kunststoffs, der vergleichsweise teuer ist, auf ein Minimum zu reduzieren, wobei die angestrebte Schutzwirkung dennoch erreicht werden kann. Ein optimales Verhältnis zwischen Kosten und Schutzwirkung des vernetzten Endprodukts kann erreicht werden, wenn die Wandstärke der vernetzbaren Schicht in etwa 10% der Wandstärke des Hohlkörpers beträgt. Auch unter optischen und ästhetischen Gesichtspunkten erweist sich dieses Wandstärkeverhältnis als besonders vorteilhaft.

Bevorzugte Ausführungsbeispiele der vorliegenden Erfindung werden nachstehend mit Bezug auf die beiliegenden Zeichnungen ausführlich beschrieben.

### Kurze Beschreibung der Zeichnungen

- Fig. 1: zeigt ein Schemadiagramm eines erfindungsgemäßen Verfahrens zur Herstellung eines abschnittsweise vernetzten, einschichtigen Rohres.
- Fig. 2: zeigt ein Schemadiagramm eines erfindungsgemäßen Verfahrens zur Herstellung eines abschnittsweise vernetzten, mehrschichtigen Rohres.
- Fig. 3: zeigt den Querschnitt eines nach dem erfindungsgemäßen Verfahren hergestellten Rohres mit einer Innenschicht aus vernetztem Polyethylen und einer Außenschicht.
- Fig. 4: zeigt den Querschnitt eines nach dem erfindungsgemäßen Verfahren hergestellten Rohres mit einer Innenschicht aus vernetztem Polyethylen, einer Zwischenschicht und einer weiteren Außenschicht.

### Detaillierte Beschreibung der Zeichnungen

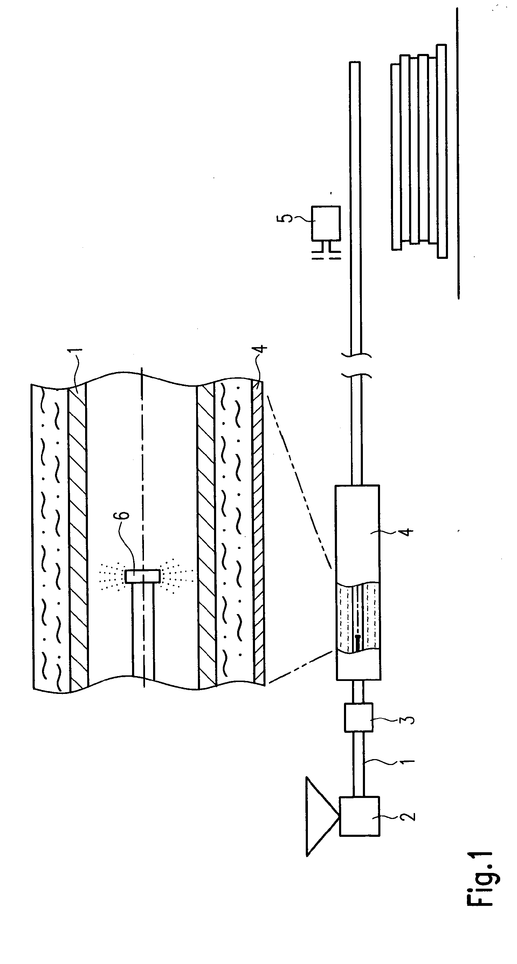

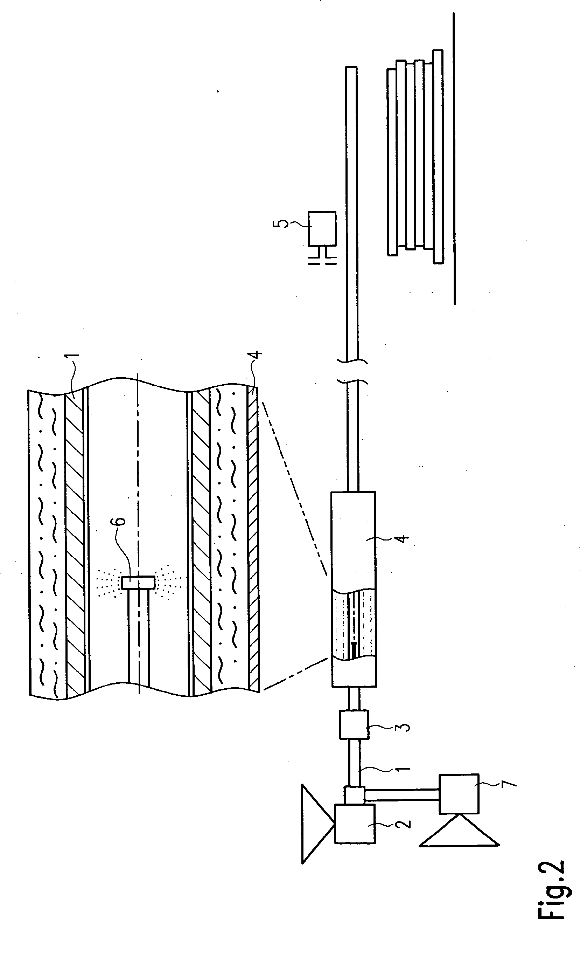

Die Figuren 1 und 2 zeigen Schemadiagramme von erfindungsgemäßen Verfahren zur Herstellung eines Hohlkörpers 1, vorzugsweise eines Rohres, der einen vernetzbaren Kunststoff aufweist, mit den folgenden Schritten: Extrudieren des vernetzbaren Kunststoffs zu einem Hohlkörperprofil 1 und Fördern des Hohlkörpers 1 in einem kontinuierlichen Strang. Erfindungsgemäß ist vorgesehen, dass der vernetzbare Kunststoff, der beispielsweise die Innenschicht oder die Außenschicht des Hohlkörpers 1 bildet, während des Förderns des Hohlkörpers 1 mit einem Vernetzungsmittel beaufschlagt wird, und die jeweils andere Schicht der Innenschicht oder der Außenschicht gleichzeitig gekühlt wird. Das Rohrinnere, im Speziellen der vom Rohr umrandete Hohlraum, wird nachstehend als das Lumen des Rohres bzw. des Hohlkörpers 1 bezeichnet. Bei den in Fig.1 und Fig.2 dargestellten Verfahren bildet ein vernetzbarer Kunststoff die Innenschicht des Hohlkörpers 1. Bei einem Verfahren, bei dem der vernetzbare Kunststoff die Außenschicht des Hohlkörpers 1 bildet, wird die Außenseite mit einem Vernetzungsmittel beaufschlagt und das Lumen des Hohlkörpers 1 wird beispielsweise mit kaltem Wasser gekühlt. Dabei ist ggf. eine Sonderkalibrierung bzw. Führung zu verwenden, um das heiße Kunststoff-Material in Form zu halten.

Das Verfahren eignet sich für einschichtige als auch für mehrschichtige Rohre. Bei mehrschichtigen Rohren bildet der vernetzbare Kunststoff eine Randschicht, d.h. die Innen- und/oder Außenschicht. Fig.1 zeigt ein entsprechendes Verfahren zur Herstellung eines einschichtigen Rohres und Fig.2 ein entsprechendes Verfahren zur Herstellung eines mehrschichtigen Rohres.

Wesentlich ist, dass das extrudierte Rohr zumindest abschnittsweise vernetzbares Material bzw. vernetzbaren Kunststoff enthält. In den nachstehenden Beispielen wird Polyethylen als vernetzbarer Kunststoff verwendet, wobei die Vernetzung des vernetzbaren Polyethylens durch Zufuhr von ausreichend Wärme und Feuchtigkeit z.B. mit Wasserdampf initiiert wird, und wobei der Vernetzungsgrad und die Vernetzungsgeschwindigkeit durch den Dampfdruck und die Dampftemperatur beeinflusst werden kann. Es handelt sich um sog. feuchtigkeitsvernetzbares Polyethylen. Der Dampf wirkt dabei als Initiator der Vernetzung oder als Vernetzungsmittel im Sinne der Erfindung.

Schematisch dargestellt ist in Fig.1 eine Produktionsstrecke zur Herstellung des Rohres, in der der feuchtigkeitsvernetzbare Hohlkörper aus einem Ausgangsstoff geformt und vorzugsweise in einem kontinuierlichen Strang, in der Darstellung von links nach rechts, gefördert wird. In der Produktionsstrecke des Rohres 1 befindet sich ein Extruder 2 an dem ein Werkzeug zum Extrudieren des Hohlkörpers angeordnet ist, eine Kalibriereinrichtung 3 zum Kalibrieren des Hohlkörpers, eine Kühleinrichtung 4 zum Abkühlen des Hohlkörpers und eine Schneideeinrichtung 5 zum Durchschneiden des Hohlkörpers.

Im Extruder 2 werden die Ausgangsstoffe des zu extrudierenden Hohlkörpers vermischt und geschmolzen. Es handelt sich um die an sich bekannten Ausgangsstoffe eines feuchtigkeitsvernetzbaren Polyethylens. Aus den geschmolzenen Ausgangsstoffen wird ein Hohlkörper, vorzugsweise ein Rohr, in einem kontinuierlichen Vorgang extrudiert.

In dem in Fig.2 schematisch dargestellten Verfahren kommt zusätzlich ein zweiter Extruder 7 zum Einsatz. Mit dem zweiten Extruder 7 wird die Extrusion einer weiteren Schicht über das Werkzeug am Extruder 2 symbolisiert. Es können allerdings auch andere Verfahren zur Ausbildung mehrschichtiger Rohre zum Einsatz kommen. Die Erzeugung mehrschichtiger Hohlkörper mit einer Randschicht aus vernetzbarem Kunststoff wird als bekannt angesehen und an dieser Stelle nicht näher beschrieben. Die in Fig. 2 nachgeschalteten Verarbeitungsschritte sind gleich wie in dem mit Bezug auf Fig. 1 beschriebenen Verfahren.

Der extrudierte Hohlkörper 1 wird in einem kontinuierlichen Strang in der Produktionsstrecke gefördert und der Kalibriereinrichtung 3 zugeführt. In der Kalibriereinrichtung 3 herrscht an der Außenseite des Hohlkörpers ein Unterdruck. Durch den Unterdruck an der Außenseite wird der Hohlkörper 1 in die gewünschte Form gebracht. Die Kalibrierung findet in der Kalibriereinrichtung 3 auf einer Länge von ca. 1 m statt.
Während der Kalibrierung in der Kalibriereinrichtung 3 wird der extrudierte Hohlkörper 1 in der Kühleinrichtung 4 an der Außenseite abgeschreckt. Dies dient dem Zweck, den kalibrierten aber noch heißen und weichen Hohlkörper 1 zu fixieren, um ungewollte Verformungen oder Beschädigungen im weiteren Herstellungsprozess zu vermeiden. Dazu wird das Rohr von der Außenseite mit Wasser besprüht oder durchläuft ein Wasserbad. Das Wasser zum Abkühlen der Rohraußenseite hat vorzugsweise eine Temperatur von kleiner gleich der Raumtemperatur beispielsweise ca. +20°C. Die Abkühlstrecke hat üblicherweise eine Länge von ca. 50 m. In der vergrößerten Darstellung der Fig. 1 ist ein Schnitt entlang der Mittelachse des im Kühleinrichtung 4 liegenden Rohres zu sehen. In der vergrößerten Darstellung ist insbesondere dargestellt, wie der vernetzbare Kunststoff an der Innenseite des Hohlkörpers 1 mit einem Vernetzungsmittel oder einem Initiator der Vernetzung beaufschlagt wird. Der Initiator oder das Vernetzungsmittel wird dazu in das Lumen des kontinuierlichen Hohlkörpers 1 eingebracht. Das Vernetzungsmittel oder der Initiator der Vernetzung muss jedoch nicht zwangsläufig auf der Höhe der Kühleinrichtung 4 in das Lumen des kontinuierlichen Hohlkörpers 1 eingebracht werden. Der vernetzbare Kunststoff kann je nach Belieben innerhalb der gesamten Produktionsstrecke, die im Extruder 2 beginnt, mit dem Vernetzungsmittel oder dem Initiator der Vernetzung beaufschlagt werden.

Im beschriebenen Ausführungsbeispiel wird Wasserdampf als Vernetzungsmittel oder als Initiator der Vernetzung während der Extrusion des Rohres über einen schematisch dargestellten Dorn 6 mit einer Düse in das Lumen des Rohres eingeblasen. Dies kann im einfachsten Fall über ohnehin vorhandene Stützluftkanäle in am Extruder 2 angeordneten Werkzeug geschehen, zusätzlich können auch separate Kanäle vorgesehen werden. Dadurch wird der vernetzbare Kunststoff, der die Innenseite des Hohlkörpers 1 bildet, mit dem Vernetzungsmittel oder dem Initiator der Vernetzung beaufschlagt.
Mit dem Wasserdampf wird dem vernetzbaren Kunststoff das zur Vernetzung erforderliche Vernetzungsmittel und im Speziellen Wärme und Feuchtigkeit zugeführt. Der Dampf ist dabei in erster Linie Energieträger und nur in zweiter Linie Feuchtigkeitsspender. Der Dampf wird in einer separaten Vorrichtung (nicht dargestellt) erhitzt und beim Durchströmen des am Extruder 2 angeordneten Werkzeug weiter erhitzt.

Dabei wird die zum Aufschmelzen des Ausgangsstoffes des extrudierten Hohlkörpers 1 erzeugte Wärme in vorteilhafter Weise genutzt.

Durch die Einstellung des Dampfdrucks und der Dampftemperatur werden die Vernetzungsgeschwindigkeit und der Vernetzungsgrad beeinflusst. Der Dampfdruck und die Dampftemperatur werden der gewünschten Vernetzungsgeschwindigkeit und dem gewünschten Vernetzungsgrad sowie den Rohrabmessungen entsprechend angepasst. Eine hohe Temperatur wird beispielsweise durch eine hohe Dampfmenge erzeugt. Die hohe Temperatur ist erforderlich, damit Feuchtigkeit in das zu vernetzende Material eindiffundieren kann.

Der Dampf hat gegenüber der Umgebungsatmosphäre einen Überdruck von ca. 0,5 bar bis 1 bar und eine Temperatur von vorzugsweise +100°C bis +200 °C. Der Dampf weist vorzugsweise einen Druck bzw. eine Temperatur auf, bei denen er im Inneren des Hohlkörpers 1 bis zum Abschneiden des Rohres mit der Schneideeinrichtung 5 nicht kondensiert. Der Dampf sollte aber nicht heißer sein als +200°C, um zu verhindern, dass das Material des Hohlkörpers 1 unter hohem Druck und hoher Temperatur weich wird und sich eventuell ungewollt verformt. Der heiße Dampf dient gleichzeitig als Druckmedium zur Ausübung eines Gegendrucks zu der Umgebungsatmosphäre, um die Form des Hohlkörpers 1 auch in nachfolgenden Bearbeitungsschritten zu halten und bleibt bis zur Schneideeinrichtung 5 im Rohr 1. Der extrudierte Hohlkörper 1 ist auf der Produktionsstrecke noch heiß, so dass das Vernetzungsmittel bei sehr hohen Temperaturen in die Polymerschmelze ein diffundiert. Die Diffusionsgeschwindigkeit ist wie allgemein bekannt temperaturabhängig und nimmt über dem Kristallitschmelzpunkt nochmals deutlich zu, da das Vernetzungsmittel nicht in bzw. durch die Kristallite hindurch diffundieren kann.

Wenn die Vernetzung z.B. bei schnell laufenden bzw. dickwandigen Rohren am Ende der Extrusionsstrecke verfahrensbedingt noch nicht abgeschlossen ist, findet automatisch eine Nachvernetzung statt. Denn nach dem Abkühlen, d.h. in der Regel erst nach dem Ablängen eines Rohrabschnitts mit der Schneideeinrichtung 5, bildet sich ein Kondensat an der mit dem Vernetzungsmittel beaufschlagten Wandfläche. Die Menge an Vernetzungsmittel im bzw. an der Oberfläche des Materials reicht aus, eine Nachvernetzung ohne weitere Zuführung von Vernetzungsmittel durchzuführen.

Nach der Kühleinrichtung 4 und evtl. nachfolgenden Bearbeitungsschritten werden bestimmte Längen des extrudierten Hohlkörpers 1 durch die Schneideeinrichtung 5 vom kontinuierlichen Strang abgetrennt.

Ein gesonderter Arbeitsschritt zur Vernetzung des extrudierten Hohlkörpers 1 ist nicht mehr nötig oder kann erheblich verkürzt werden. Durch die Vernetzung des noch heißen extrudierten Hohlkörpers 1 kann ein höherer Vernetzungsgrad und homogenere Vernetzung erreicht werden, als bei der herkömmlichen Vernetzung eines Rohres nach dem Erstarren, da sich noch keine Kristallite gebildet haben, welche die Vernetzung behindern.

Bevorzugte Beispiele zur Anwendung des Herstellungsverfahrens sind Heizungsrohre, Heißwasserrohre (Trinkwasser-Installation), Gas-Installationsrohre, Fern- / Nahwärmerohre, erdverlegte Versorgungsleitungen für Gas und Trinkwasser sowie Druckentwässerung mit Schutzeigenschaften (Schutzschicht innen und/oder außen), Industrierohre und Mehrschichtrohre (vernetzte Schicht innen und/oder außen). Die Anwendung des erfindungsgemäßen Verfahrens bei der Herstellung von Trinkwasserrohren hat gegenüber den herkömmlichen Vernetzungsverfahren den Vorteil, dass durch das Vernetzungsmittel auch zumindest teilweise ein Abtransport der Vernetzungsprodukte bzw. Geruchs- bzw. Geschmacksstoffe erfolgen kann.

Durch das in Fig. 2 dargestellte, erfindungsgemäße Verfahren wird ein mehrschichtiges Rohr hergestellt, das abschnittsweise, ausgehend von der Rohrinnenseite, vernetzt ist. Das Grundmaterial des extrudierten Hohlkörpers ist ein beliebiger, thermoplastischer Kunststoff, Duromer oder Elastomer. Die Innenschicht besteht aus einem beliebigen thermoplastisch verarbeitbaren Material, beispielsweise einem Polyolefin (PE, PP) oder PVC.

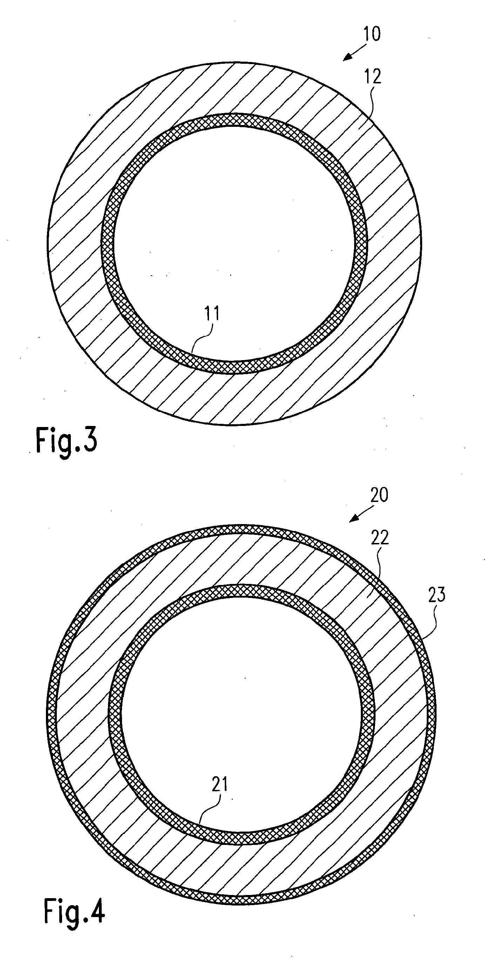

Fig. 3 zeigt den Querschnitt eines nach dem erfindungsgemäßen Verfahren hergestellten Rohres 10 mit einer Innenschicht 11 und einer Außenschicht 12. Das Rohr 10 ist aus einem Standard- PE wie z.B. PE80 oder PE100 hergestellt und weist an dessen innerem Umfang die Innenschicht 11 aus erhöht spannungsrissbeständigem Polyethylen beispielsweise einem vernetztem Polyethylen PE-X auf. Die Dicke der Innenschicht beträgt ca. 10% der gesamten Wandstärke. Da PE-X der mit großem Abstand spannungsrissbeständigste Polyethylenwerkstoff ist, reichen bereits vergleichsweise dünne Schichten aus, um damit ausgestattete Mehrschichtrohre 10 punktlastbeständig auszurüsten.

Da alle spannungsrissbeständigen Materialien im Vergleich zu Standard-PE erheblich teurer sind, ist die Ausführung mit der dünnen Innenschicht 11 aus PE-X zudem noch besonders kostengünstig. Die Innenschicht 11 kann, wenn geeignete Mittel zur Verfügung stehen, so dünn wie möglich gefertigt werden, sollte aber in jedem Falle decken bzw. in sich geschlossen sein. Bei einer Wandstärke der Innenschicht von etwa 10% der gesamten Wandstärke des Rohres 10 wird ein optimales Verhältnis von Kosten und Schutzwirkung des vernetzten Endprodukts erzielt. Das erfindungsgemäß hergestellte Rohr 10 hat hinsichtlich der Beständigkeit praktisch die Eigenschaften eines Rohres, das vollständig aus vernetztem Polyethylen besteht: es kann wie diese für die gesamte Dauer der normgerechten Lebenserwartung einer Punktbelastung ausgesetzt werden, ohne zu versagen, und es kann ebenso wie diese kostengünstig ohne Sandbettung verlegt werden.

Ein weiterer Vorteil dieser Ausführungsform besteht in der erhöhten Beständigkeit gegenüber langsamem Risswachstum nach Beschädigung der Außenschicht 12 bei Lagerung, Transport oder bei - insbesondere grabenloser - Verlegung. Die Kombination von leicht erhöhter Wanddicke und einem Material der Innenschicht 11, das gegenüber Risswachstum ganz besonders widerstandsfähig ist, erlaubt die Fertigung des Rohres 10, dessen Empfindlichkeit gegenüber dem Wachstum von äußeren Kerben nur noch von den wesentlich teureren Rohren, die vollständig aus PE-X hergestellt sind, übertroffen wird.

Auch hinsichtlich schnellem Risswachstum bietet das nach dem erfindungsgemäßen Verfahren hergestellte Rohr 10 einen erhöhten Widerstand gegenüber herkömmlichen einschichtigen und mehrschichtigen Rohren aus unvernetzten Polyethylenen, da bei dieser Versagensform der Bruch des Rohres ebenfalls von der Innenseite ausgeht, wo bei dem erfindungsgemäßen Rohr 10 die gegenüber Risswachstum äußerst widerstandsfähige Innenseite 11 angeordnet ist.

Die Ausbildung der Innenschicht 11 unter Verwendung von PE-X ermöglicht es zudem, ein die Außenschicht 12 bildendes Grundrohr, dessen Abmessungen einschlägigen Normen wie z.B. der EN 12201 entsprechen, mit der zusätzlichen Innenschicht 11 auszustatten, ohne dass der Innendurchmesser mehr als unwesentlich verringert wird. Bei guter Prozessführung ist es sogar in vielen Fällen möglich, mit der Gesamtwanddicke weitgehend in der Normtoleranz zu bleiben, wenn die Dickenschwankungen des die Außenschicht 12 bildenden Grundrohres nur wenig über dessen Nennmaß hinausgehen und die Dicke der Innenschicht 11 in etwa der Normtoleranz, d.h. ca 5-15% der Normwanddicke entspricht.

Neben diesen technischen Vorteilen hat diese erfindungsgemäße Ausführungsform noch einen weiteren: die Zulassung von Druckrohren in verschiedensten Nationalstaaten ist trotz internationaler Harmonisierung und Normung immer noch zeit- und kostenaufwendig. Dadurch, dass diese bevorzugte Ausführungsform auf einem die Außenschicht 12 bildenden, genormten Rohr aufbaut und nur eine zusätzliche Innenschicht 11 aufweist, entfallen diese Aufwendungen völlig oder weitgehend.

Gegenüber Vollwandrohren aus PE-X bietet die erfindungsgemäße Ausführung mit nur der einen Innenschicht 11 aus diesem Material neben dem Vorteil der weitaus kostengünstigeren Herstellung noch die Möglichkeit, diese Rohre mittels Stumpfschweißung zu verbinden.

Um die bevorzugten Rohrabmessungen im Rahmen der mit Bezug auf Fig. 3 beschriebenen Ausführungsform zu veranschaulichen, werden die nachstehenden Beispiele angeführt.

### Beispiel 1

Das die Außenschicht 12 bildende Grundrohr entspricht der EN 12201 aus PE100 mit einem Außendurchmesser von 110 mm und einer Wanddicke von 10 mm. Zusätzlich weist dieses Rohr 10 eine Innenschicht 11 aus silanvernetztem Polyethylen mit einem Vernetzungsgrad von mindestens 60% und einer Schichtdicke von 1,0 mm auf. Dieses Rohr 10 erlaubt aufgrund seiner Beständigkeit gegenüber Punktlasten die Verlegung in Aushubmaterial ohne Sandbettung, ohne innerhalb der normgerechten Lebenserwartung aufgrund von Spannungsrissen zu versagen. Zusätzlich weist dieses Rohr 10 erhöhte Widerstandsfähigkeit gegenüber langsamem Risswachstum von an der Außenwand 12 entstandenen Riefen auf.

### Beispiel 2:

Das die Außenschicht 12 bildende Grundrohr hat einen Außendurchmesser von 110 mm, eine Wanddicke von 10 mm und eine sich an deren Innendurchmesser anschließende Innenschicht 11 aus silanvernetzbarem Polyethylen mit einer Schichtdicke von 1,0 mm. Wird während der Extrusion kein Dampf in das Lumen des Rohres zugesetzt, ergibt sich ein Vernetzungsgrad unmittelbar nach der Extrusionsstrecke von etwa kleiner gleich 40%. Wird zusätzlich Dampf von ca. 1 kg / Stunde durch den Dorn 6 in das Lumen des Rohres eingebracht, ergibt sich ein Vernetzungsgrad unmittelbar nach der Extrusionsstrecke von etwa größer 65%.

Mit Bezug auf Fig. 4 wird ein weiteres, nach dem erfindungsgemäßen Verfahren hergestelltes Rohr beschrieben.
Fig. 4 zeigt den Querschnitt eines Rohres 20 mit einer Innenschicht 21, einer Zwischenschicht 22, die der vorherigen Außenschicht 12 entspricht, und einer weiteren Außenschicht 23, die bevorzugt aus Polyamid mit eingearbeiteten organophilen Schichtsilikaten besteht. Damit kann die Riefenbildung am äußeren Umfang, insbesondere bei grabenlosen Verlegemethoden (Spül-Bohrverfahren, Einpflügen, Einfräsen oder Einziehen), vermindert und gleichzeitig eine Sperrwirkung gegen Schadstoffe im Boden realisiert werden.

Es liegt auch im Rahmen der Erfindung, dass die Innenschicht 11 bzw. 21 auf vorbeschriebene Weise so aufgebaut ist, dass sie Sperrwirkuhgen gegenüber Kohlenwasserstoffen aufweist. Die Dicke der Innenschicht 11 bzw. 21 beträgt vorteilhafterweise höchstens 15% der Wanddicke des die Außenschicht 12 bzw. die Zwischenschicht 22 bildenden Grundrohres, sollte zumindest aber in sich vollständig geschlossen sein, um einerseits möglichst wenig des teuren Materials der Innenschicht 11 bzw. 21 einsetzen zu müssen und um andererseits die angestrebte Wirkung noch zu erzielen. In Ausnahmefällen, bei erhöhten Anforderungen an das Rohr 10 bzw. 20, oder bei weniger wirksamen Material der Innenschicht 11 bzw. 21 können die Schichtdicken auch bis zu 25% betragen.

In einer möglichen Weiterbildung weist das Rohr eine zusätzliche, rein polymere Sperrschicht, bevorzugt aus PPS, PVDC, PAN-Copolymeren, PVDF, Polyester, Polyamid, EVOH oder LCP auf.

Bei allen erfindungsgemäßen Ausführungsformen kann es nötig sein, zwischen den vorgenannten Rohrschichten Haftvermittlerschichten einzubringen; auch eine zusätzliche Außenschicht, z.B. zur optischen Gestaltung der Oberfläche, gehört zum Umfang der Erfindung, ebenso wie Rohre, die am äußeren Umfang Farbstreifen aufweisen. Diese Außenschicht kann auch die Aufgabe erfüllen, Bodenfeuchtigkeit oder Grundwasser von einer Sperrschicht fern zu halten, falls diese hygroskopisch ist und Wasseraufnahme die Barriereeigenschaften beeinträchtigen.

## Patentansprüche

1. Verfahren zur Herstellung eines Hohlkörpers (1), vorzugsweise eines Rohres, der zumindest abschnittsweise einen vernetzbaren Kunststoff aufweist, mit den folgenden Schritten: Extrudieren des vernetzbaren Kunststoffs zu einem Hohlkörperprofil und Fördern des Hohlkörpers (1) in einem kontinuierlichen Strang, **gekennzeichnet durch** Beaufschlagen des vernetzbaren Kunststoffs mit einem Vernetzungsmittel, während des Förderns des kontinuierlichen Strangs.

2. Verfahren Anspruch 1, **dadurch gekennzeichnet, dass** der zu vernetzende Kunststoff die Innenschicht des Hohlkörpers (1) bildet.

3. Verfahren nach einem der vorangegangenen Ansprüche, **dadurch gekennzeichnet, dass** das Vernetzungsmittel in das Lumen des Hohlkörpers (1) eingebracht wird.

4. Verfahren nach einem der vorangegangenen Ansprüche, **dadurch gekennzeichnet, dass** der Hohlkörper (1), während des Beaufschlagens des vernetzbaren Kunststoffs mit dem Vernetzungsmittel, gleichzeitig gekühlt wird.

5. Verfahren nach einem der vorangegangenen Ansprüche, **dadurch gekennzeichnet, dass** der zu vernetzende Kunststoff die Außenschicht des Hohlkörpers (1) bildet.

6. Verfahren nach einem der vorangegangenen Ansprüche, **dadurch gekennzeichnet, dass** das Vernetzungsmittel in den zu vernetzenden Kunststoff eindiffundiert wird.

7. Verfahren nach einem der vorangegangenen Ansprüche, **dadurch gekennzeichnet, dass** der zu vernetzende Kunststoff unmittelbar nach dem Extrudieren mit dem Vernetzungsmittel beaufschlagt wird.

8. Verfahren nach einem der vorangegangenen Ansprüche, **dadurch gekennzeichnet, dass** das Vernetzungsmittel ein Druckmedium ist.

9. Verfahren nach einem der vorangegangenen Ansprüche, **dadurch gekennzeichnet, dass** das Vernetzungsmittel ein wasserhaltiges Druckmedium ist.

10. Verfahren nach einem der vorangegangenen Ansprüche, **dadurch gekennzeichnet, dass** das Vernetzungsmittel vor dem Aufbringen erwärmt wird.

11. Verfahren nach einem der vorangegangenen Ansprüche, **dadurch gekennzeichnet, dass** das Vernetzungsmittel Wasserdampf aufweist.

12. Verfahren nach einem der vorangegangenen Ansprüche, **dadurch gekennzeichnet, dass** das Vernetzungsmittel einen Überdruck gegenüber der Umgebungsatmosphäre von 0,5 bar bis 1 bar aufweist.

13. Verfahren nach einem der vorangegangenen Ansprüche, **dadurch gekennzeichnet, dass** das Vernetzungsmittel eine Temperatur von 100°C bis 200°C aufweist.

14. Verfahren nach einem der vorangegangenen Ansprüche, **dadurch gekennzeichnet, dass** der Kunststoff des Hohlkörpers (1) silanhaltiges Polyethylen aufweist.

15. Verfahren nach einem der vorangegangenen Ansprüche, **dadurch gekennzeichnet, dass** der Hohlkörper (1) mehrschichtig ist, wobei der vernetzbare Kunststoff die Innenseite und/oder die Außenseite des Hohlkörpers (1) bildet.

16. Verfahren nach einem der vorangegangenen Ansprüche, **dadurch gekennzeichnet, dass** die Wandstärke der vernetzbaren Schicht in etwa 10% der Wandstärke des Hohlkörpers (1) beträgt.
